# EUROPEAN PATENT SPECIFICATION

(11) **EP 3 020 266 B1**
(45) Date of publication and mention of the grant of the patent: **11.04.2018**
(21) Application number: 15194002.0
(22) Date of filing: 11.11.2015
(51) Int. Cl.: A01D 90/12, G01G 19/08, G01N 21/3563, G01N 21/359

(54) **LOADER WAGON SYSTEM AND METHOD FOR COLLECTING STALK MATERIAL AND MEASURING CONTENTS OF THE COLLECTED STALK MATERIAL**
LADEWAGENSYSTEM UND VERFAHREN ZUM SAMMELN VON HALMMATERIAL UND ZUR MESSUNG DER INHALTE DES GESAMMELTEN HALMMATERIALS
SYSTÈME DE REMORQUE AUTOCHARGEUSE ET PROCÉDÉ DE COLLECTE DE PAILLE ET DE MESURE DES TENEURS DE LA PAILLE COLLECTÉE

(30) Priority: 11.11.2014 NL 1041042
(43) Date of publication of application: 18.05.2016
(73) Proprietor: Beheermaatschappij Schuitemaker B.V., 7461 AG Rijssen (NL)
(72) Inventor: Wilmink, Hermanus Gerhardus Joseph, 7461 AG Rijssen (NL)
(74) Representative: V.O.

(56) References cited:
- EP-A1- 1 053 671
- EP-A1- 1 577 663
- EP-A2- 2 275 287

## Description

### FIELD AND BACKGROUND OF THE INVENTION

The invention relates to a loader wagon system and a method for collecting stalk material, such as grass and Alfalfa (Lucerne), and measuring contents of the collected stalk material.

Measuring the contents of agricultural products such as grains or forage during harvesting with for instance near infrared sensors spectroscopy for analysing percentages of moisture (and its complement dry matter), sugar, starch, crude protein, fat and ash is known from for instance WO2006/010761, US 6 421 990, US2010/0110428, DE 10 2013 207 281 and DE 32 32 746.

To measure the harvested quantity of the constituent or constituents of which the relative contents has been measured, also the mass of the harvested agricultural crop has to be determined. Determining the mass of harvested material by performing volumetric measurements on a flow of harvested material is known from US 6 421 990, DE 196 48 126 and EP 1 053 671 which discloses a a loader wagon system according to the introductory portion of claim 1 and a method for collecting stalk material according to the introductory portion of claim 6. US2010/110428 discloses measuring the flow using a throughput determining device in the form of a baffle urged against the flow and deflected thereby. DE 10 2013 207 281 discloses determining the mass of pressed bales of which relative contents of constituents has been measured.

In the field of loader wagons, it has been disclosed to measure the weight of a loaded loader wagon after harvesting during standstill on a level ground surface to determine the weight of the loaded stalk material or other crop. However, a problem of measuring a quantity of a harvested constituent during harvesting stalk material by gathering cut and, to some extent, dried halm material from a field and transporting the stalk material into a loader wagon is, that the mass of stalk material that is passed per unit of time or per unit of displacement along a gathering trajectory tends to fluctuate, so that a relative contents measured while relatively little stalk material is gathered per unit of time or displacement contributes less to the overall quantity than a relative contents measured while relatively much stalk material is gathered per unit of time or displacement. This problem is exacerbated when it is desired to map differences in the yield of a constituent over a parcel in the course of precision agriculture.

### SUMMARY OF THE INVENTION

It is an object of the present invention to provide a simple solution that allows reliably measuring constituent yields from a parcel during harvesting of cut stalk material, which may have dried to some extent, from a field, also when crop mass is unevenly distributed over the field.

According to the invention, this object is achieved by providing a loader wagon system according to claim 1. The invention can also be embodied in a method according to claim 6.

Because the data processor calculates weight change data indicative of a plurality of weight changes resulting from the additional weight of gathered stalk material as determined by weighing the halm material present in the loader wagon, from which the content data have been measured, and calculates a quantity of the at least one constituent gathered over a trajectory by calculating a plurality of products of content data multiplied by associated weight change data and sums the products over the trajectory from which the stalk material has been gathered, the content data measured from the gathered stalk material can be associated to the mass of the stalk material from which the contents data have been measured in a simple and reliable manner, even though stalk material, and in particular dried stalk material, constitutes a mass that can have varying compressibility characteristic (e.g. more or less resilience and/or springiness), which complicates determining the mass of a flow of gathered stalk material.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic side view in cross-section of an example of a loader wagon system according to the invention;
Fig. 2 is an example of a flow chart of a harvest registration algorithm of a method according to the invention; and
Fig. 3 is an example of a flow chart of a yield calculation algorithm of a method according to the invention.

### DETAILED DESCRIPTION

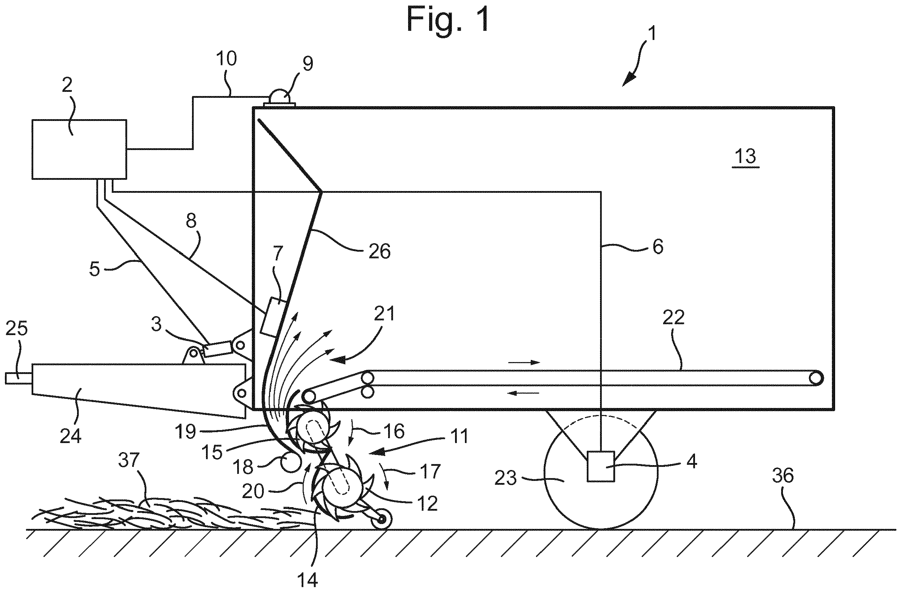

The invention is first described with reference to an example of a loader wagon system according to the invention as shown in Fig. 1. The system shown in Fig. is composed of a loader wagon 1 and a data processor 2. The data processor 2 can be mounted in the loader wagon 1, but may also be mounted on a tractor (e.g. forming part of a tractor control system) coupled to the wagon 1 or be located remote from the wagon 1, for instance in an office. The data processor 1 is connected to weight sensors 3, 4 via connections 5, 6, connected to a contents sensor 7 via a connection 8 and connected to a position sensor 9 via a connection 10. In particular if the data processor is located remotely or arranged in the tractor, the connections 5, 6, 8, 10 may also be wireless connections. The sensors would then be connected to transmitter receivers communicating with a transmitter receiver connected to the data processor. The connections may also be realized indirectly, off line by connecting a data storage on which data received from the sensors are stored to the data processor or the connections can be integrated in a vehicle data bus of the tractor control system. The position sensor 9 may for instance be a GPS module and may alternatively be positioned on the tractor coupled to the load wagon 1.

The load wagon according to the present example is a chop loader wagon suitable for the gathering and cutting of all sorts of stalk material, such as grass, hay, Alfalfa/Lucerne, but also for the transport of heavy silage products during the harvesting of maize. The load wagon has a trailing pick-up 11 that can be folded away against the bottom of the wagon 1. The pick-up 11 has a star shaped pick-up rotor 12 with width slightly smaller than the internal width of a load carrying box 13 of the wagon 1. The pick-up rotor 12 has tines that are bent and project through slits in a screen 14 when oriented towards the screen 14. A pressing rotor 15 is arranged above the pick-up rotor 12 and coupled to the same drive for rotation in unison with the pick-up rotor in a sense of rotation indicated by arrows 16, 17. The pressing rotor is arranged opposite of a feed roller 18 and a pressing channel guide 19 for pressing and transporting halm material received from the pick-up rotor 12 in the direction of arrow 20. Compressed halm material is pressed and cut between the transport rotor 15 and the feed roller 18 and then transported further into the box 13 along a front wall 26 as indicated by arrows 21. At the bottom of the box 13, a scraper floor 22 is arranged for urging loaded stalk material from a front area towards a rear area of the box 13. The scraper floor 13 may for instance be provided with circulatable deck chains.

The loader wagon 1 according to the present example has two co-axial wheels 23 that support the rest of the loader wagon 1 via the weight sensors 4, so that the pressure exerted on the wheels can be detected. In view of loading capacity and pressure distribution, the loader wagon can also have more than two sets of co-axial wheels, for instance in a steered tandem or tri-axle arrangement. A drawbar 24 is arranged at a front end of the loader wagon 1 and has a coupling 24 for coupling the wagon 1 to a tractor. The drawbar 24 is pivotally connected to the box unit 13, the orientation of the draw bar 24 relative to the box unit about the horizontal pivoting axis being held via the weighing sensor 3, so that vertical load transferred via the drawbar 24 can also be detected. It is noted that a wagon according to the invention may also be a self riding vehicle with a motor and a drive for driving wheels of the vehicle.

The content sensor 7 is arranged for measuring through a window in the front wall 26 and is positioned and arranged for sensing one or more constituent contents of the stalk material being transported into the load carrying box 13. The contents sensor 7 may for instance be a near infrared spectroscopy (NIRS) sensor and be arranged and connected for transferring detected near infrared spectra representative of the relative contents of the constituent or constituents in the stalk material to the data processor 2, which is arranged for determining an estimate of the relative contents of the constituent or constituents in the stalk material. Software for analyzing near infrared measurement results is for instance commercially available from Dinamica Generale, Poggio Rusco, Italy. Examples of alternative or additional sensors for sensing a relative contents (e.g. a weight percentage) of one or more constituents in the gathered stalk material are infrared or other optical or spectrometric sensors, ultrasonic, microwave, conductivity and dielectric capacity sensors.

The weight sensors 3, 4 are arranged and connected for sending signals indirectly indicative of the loads detected by these sensors 3, 4 to the data processor 2. The data processor 2 is arranged for calculating a total weight value representing the sum of vertical loads exerted via the draw bar 24 and via the wheels 23. The total sum of vertical loads minus the weight of the empty wagon 1 (excluding wheels) constitutes the weight of the stalk material in the box 13. Accordingly, the sensors 3, 4 form a system for sensing weight of stalk material present in the loader wagon 1. The data processor 2 is further arranged for registering, during gathering, the content data determined from the contents signals received from the sensor 7 in combination with weight data determined from the weight signals resulting from the weight of gathered stalk material from which the content signal has been measured. The data processor 2 is further arranged for calculating associated weight change data resulting from the additional weight of gathered stalk material from which the content data have been measured, and for calculating a quantity of the constituent or constituents gathered over a trajectory by calculating a plurality of products of the content data multiplied by the associated weight change data resulting from the additional weight of gathered halm material from which the content data have been measured and summing these products over the trajectory from which the stalk material has been gathered.

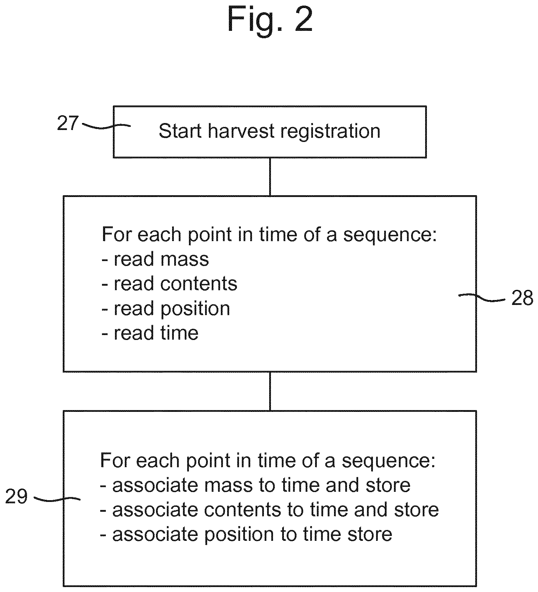

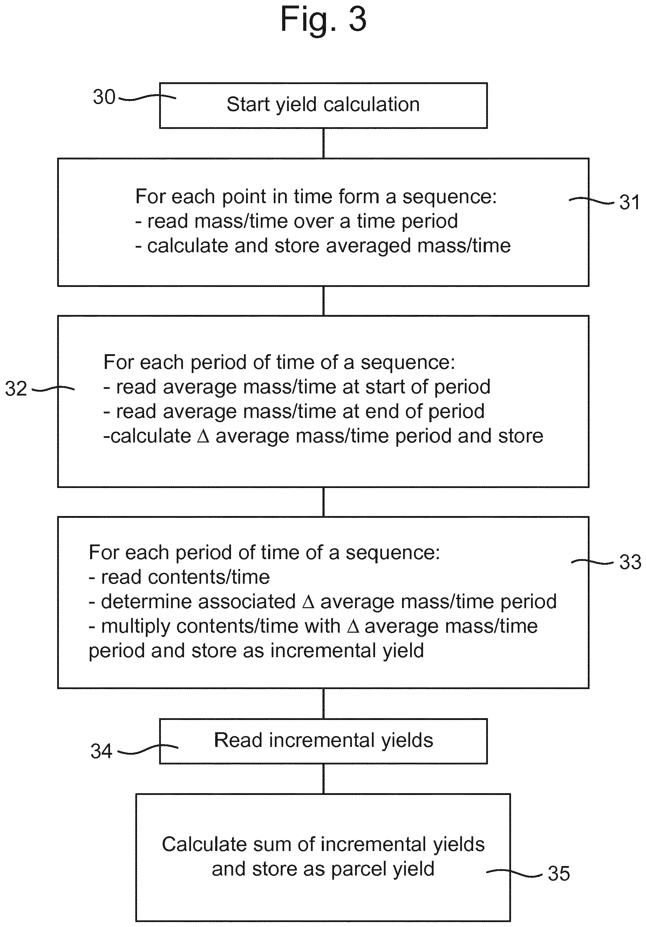

Operation of a loader wagon system according the invention is now described with reference to flow charts of algorithms for controlling the data processor 2 as shown in Figs 2 and 3.

For gathering halm material over a trajectory, for instance a trajectory covering a parcel of stalk material land or a portion of such a parcel, the loader wagon 1 is passed over the trajectory in a manner as is usual for gathering previously cut and, optionally, partially dried stalk material from a field. The pick-up 11 of the wagon 1 gathers stalk material and transporting gathered stalk material into the load carrying box 13 of the wagon 1.

For starting harvest registration, a harvest registration algorithm as shown in Fig. 2 is started (instruction 27). The content sensing system 7 of the wagon 1 measures at least one constituent content of the stalk material being transported into the load carrying box 13 and sends contents signals to the data processor 2. In accordance with instruction 28, the data processor 2 samples the contents signal for each point in time of a sequence and reads a contents value determined from the contents signal. The weight sensing system 3, 4 of the wagon measures weight of (i.e. weights) stalk material present in the loader wagon 1 and sends weight signals to the data processor 2. The data processor 2 samples the weight signal for each point in time of a sequence and reads a weight value determined from the weight signal. For each of these points in time, also time and position values are read from the GPS module 9.

In accordance with instruction 29, the data processor 2 stores, during gathering, content, weight and position data determined from the received signals in combinations with associated time signals. This is continued, until all stalk material has been gathered from a parcel of stall material land. The collected data are stored for evaluation after gathering. By storing collected data at a relatively raw level, information contained therein can be analyzed afterwards in a wide variety of manners.

For determining the yield from the parcel, after gathering the yield calculation algorithm is started (instruction 30). First, the weight data are smoothed by averaging, for each point in time of a sequence, mass/time data over a time period and calculating averaged mass/time data for each point in time of that sequence (instruction 31). The purpose of this smoothing is to remove irregularities in the weight data caused by load variations resulting from driving over undulations. It is noted that in particular in wagons with two or three axles, this is to an important extent also achieved, because successive wheels are in contact with different portions of a track, so vertical loads exerted via individual wheels due to undulations are evened out. The averaging can for instance be carried out by averaging the weight data over a moving window of time or over sequential periods of time. For obtaining a smoothed signal without loosing too much resolution, the averaging can be carried out by weighted averaging in which values determined from weight or content data closer to a time or displacement point are multiplied by a higher factor than weight or content data more remote from the time or displacement point.

The duration of the period over which signals are averaged can be chosen in accordance with the characteristics of vertical movements of the wagon resulting from passing over undulations. An important factor determining the characteristic of such movements is the natural frequency at which the wagon tends to oscillate on its suspension when excited vertically. This natural vertical oscillation frequency of the wagon has a cycle time (e.g. 0.4 to 1 s). By providing that the window or period of time over which the weight signal is averaged has a duration that is at least equal to and preferably a whole multiple of the cycle time, it is ensured that peaks and valleys of oscillation over a natural cycle time are evened out. At a speed of 1.5 to 6 m/s which is customary for loader wagons, averaging can for instance carried out over a time interval of 0.5 to 2 s. This corresponds to averaging over a covered distance of 0.75 to 12 m, so a useful resolution is maintained.

Next, weight change data resulting from the additional weight of gathered halm material are calculated for each period in time of a sequence (instruction 32). In the present example, this is achieved by calculating the difference between averaged weights at the start and end of each period. Thus, a weight change is calculated for each of these periods from averaged weight data.

Then, for each of the periods of time, contents data are associated to the weight change data (instruction 33). To achieve that the weight change resulting from gathered stalk material is accurately associated with contents data obtained from measurements of the same portion of stalk material, the weight change data are registered in association with content data resulting from a content signal captured after a delay following capturing of the weight signals from which the weight change data have been determined. This is to take into account that stalk material is first picked up and a content signal is obtained therefrom after a brief delay needed for transporting the stalk material to the contents sensor 3. Depending on the construction of the pick-up and the position of the sensor a different delay may be optimal. Obtaining weight and contents data from the same portions of the gathered stalk material may also be achieved accurately enough without providing for a delay between the point in time from which the weight data and the contents data originate, in particular if constituent contents varies relatively slowly over a parcel.

Also for each period in time of the sequence, the yield of the constituent or constituents gathered over the trajectory is calculated by calculating a product of the content data multiplied by the associated weight change data. This can for instance be carried out every 0.5 to 2 s, so that an incremental yield is calculated for every 0.75 to 12 m and for every 2-8 m if a usual speed of about 4 m/s is maintained. These data can also be used for determining, in combination with associated position data, a map of yield of the constituent or constituents per unit of surface area over the parcel. This can be achieved in a simple manner, by registering the position data in association with said product for each of the periods in time.

To obtain the complete yield of the constituent or constituents, the incremental yields per time period are summed over the trajectory for which the total yield is calculated (instruction 34). This may for instance be achieved by summing over a trajectory during which a full wagon load has been obtained or over a trajectory covering a parcel of land.

In the method according to the present example, the weight signals are captured while the pick-unit 11 is pressed against a field 36 from which the stalk material 37 is gathered. Accordingly, the weight sensed by the sensors 3, 4 is reduced by the pressure exerted onto the ground via the pick-up unit 11. This also causes gathered stalk material to contribute to the weight of the wagon when passing between the feed roller 18 and the pressing roller 15. This is preferably taken into account when determining the delay applied when associating weight change data with contents data.

Since the pick-up 11 passes over the field, it is advantageous if the vertical force exerted via the pick-up unit 11 is relatively constant. In the present loader a constant pick-up unit pressure is achieved, since the pick up 11 is a trailing pick-up pivotally mounted for swinging in response to being lifted when encountering a terrain undulation. A pick-up that swings backward in response to being lifted when encountering a terrain undulation is particularly advantageous for maintaining an even pick-up pressure over undulations.

The data processor 2 is further arranged for storing parcel position data representing a range of position data representing a parcel from which halm material is to be gathered. In response to position data indicative of positions outside the parcel position data, automatically the calculation of a quantity of the constituent or constituents gathered is initiated, so that the parcel yield is automatically calculated in response to leaving the parcel. This facilitates operation, saves time and reduces the risk of missing yield data or having to calculate such data after work on the parcel has been completed.

Within the framework of the invention, many other embodiments than the example described above are conceivable. For instance, the weight and contents data can initially be registered in association with position data instead of in association with time data and be associated on the basis of matching position data. Also weight changes can be calculated over successive displacements instead of over successive periods in time. Furthermore, also the contents data can be smoothed, for instance to filter out artefacts therein. The sequences of points in time and time periods in several steps need not be the same, although it is preferred that sampling time intervals are equal to or smaller than time intervals at which or for which calculations are made. Several features have been described as part of the same or separate embodiments. However, it will be appreciated that the scope of the invention also includes embodiments having combinations of all or some of these features other than the specific combinations of features embodied in the examples.

## Claims

1. A loader wagon system comprising:
a load carrying box (13) for carrying harvested stalk material;
a pick-up (11) for gathering stalk material and transporting gathered stalk material into the load carrying box (13);
a content sensing system (7) for measuring at least one constituent content of the stalk material being transported into the load carrying box (13);
and
a data processor (2) connected to the content sensing system (7) for receiving content signals indicative of the at least one constituent content;
**characterized by**
a weight sensing system (3, 4) for measuring weight of stalk material present in the loader wagon (1);
wherein the data processor (2) is connected to the weight sensing system (3, 4) for receiving weight signals indicative of the weight of stalk material present in the loader wagon (1);
wherein the data processor (2) is arranged for registering, during gathering, content data determined from the received contents signals in combination with weight data determined from the weight signal resulting from the weight of gathered stalk material from which the content signal has been measured, for calculating associated weight change data resulting from the additional weight of gathered stalk material from which the content data have been measured, and for calculating a quantity of the at least one constituent gathered over said trajectory by calculating a plurality of products of said content data and said associated weight change data resulting from the additional weight of gathered stalk material from which the content data have been measured and summing said products over the trajectory from which the stalk material has been gathered.

2. A loader wagon system according to claim 1, further comprising a position determining system for determining and outputting a position signal indicative of a current position of the wagon (1), wherein the data processor (2) is connected to the position determining signal for receiving the position signals and wherein the data processor (2) is arranged for registering current position data in association with weight change data resulting from the additional weight of stalk material gathered when passing through said position and with contents data measured from said stalk material.

3. A loader wagon system according to claim 2, wherein the data processor (2) is arranged for registering the current position data in association with the weight change data resulting from the additional weight of the stalk material gathered when passing through said position and with the contents data measured from said stalk material, by registering the position data in association with said products.

4. A loader wagon according to any of the preceding claims, wherein the weight sensing system comprises weight sensors (3, 4) for sensing pressure exerted on every wheel and, if the wagon (1) is arranged for coupling to a tractor, a weight sensor (3) for sensing pressure exerted via a coupling for coupling the wagon to a tractor.

5. A loader according to claim 4, wherein the pick-up (11) is a trailing pick-up (11) pivotally mounted for swinging in response to being lifted when encountering a terrain undulation.

6. A method of gathering stalk material over a trajectory using a loader wagon system and determining a quantity of at least one constituent gathered over said trajectory, said method comprising:
passing the loader wagon (1) over said trajectory;
a pick-up (11) of the wagon (1) gathering stalk material and transporting gathered stalk material into a load carrying box of the wagon (1);
a content sensing system (7) of the wagon (1) measuring at least one constituent content of the stalk material being transported into the load carrying box (13); and
a data processor (2) receiving content signals indicative of the at least one constituent content;
charraterized in that,
a weight sensing system (3, 4) of the wagon (1) measuring weight of stalk material present in the loader wagon (1);
the data processor (2) receives weight signals indicative of the weight of stalk material present in the loader; and
the data processor (2) registering, during gathering, content data determined from the received contents signals in combination with weight data determined from the weight signal resulting from the weight of gathered stalk material from which the content signal has been measured, calculating associated weight change data resulting from the additional weight of gathered stalk material from which the content data have been measured, and calculating a quantity of the at least one constituent gathered over said trajectory by calculating a plurality of products of said content data and said associated weight change data resulting from the additional weight of gathered stalk material from which the content data have been measured and summing said products over the trajectory from which the stalk material has been gathered.

7. A method according to claim 6, further comprising: a position determining system determining and outputting a position signal indicative of a current position of the wagon (1), the data processor (2) registering current position data in association with weight change data resulting from the additional weight of stalk material gathered when passing through said position and with contents data measured from said stalk material.

8. A method according to claim 7, wherein the data processor (2) registers the current position data in association with the weight change data resulting from the additional weight of the stalk material gathered when passing through said position and with the contents data measured from said stalk material, by registering the position data in association with said products.

9. A method according to any of the claims 6-8, wherein the weight change data are registered in association with content data resulting from a content signal captured after a delay following capturing of the weight signals from which the weight change data have been determined.

10. A method according to any of the claims 6-9, wherein the weight signals are captured while the pick-unit is pressed against a field from which the stalk material is gathered.

11. A method according to any of the claims 6-10, wherein at least smoothed weight or content data are calculated by smoothing the weight or content data.

12. A method according to claim 11, wherein the smoothing is carried out by averaging the weight or content data over a moving window of time or displacement or over sequential periods of time or over sequential displacement distances.

13. A method according to claim 12, wherein the averaging is carried out by weighted averaging in which values determined from weight or content data closer to a time or displacement point are multiplied by a higher factor than weight or content data more remote from the time or displacement point.

14. A method according to claim 12 or 13, wherein the wagon (1) has a suspension for absorbing vertical wheel displacements when rolling over undulations, the suspension determining a natural vertical oscillation frequency having of the wagon (1) with a cycle time, wherein the window or period of time over which the weight data is averaged has a duration that is at least equal to and preferably a whole multiple of the cycle time.

## Patentansprüche

1. Ladewagensystem, umfassend:
einen Ladung tragenden Kasten (13) zum Tragen von Halmmaterial;
einen Aufnehmer (11) zum Sammeln von Halmmaterial und Transportieren des gesammelten Halmmaterials in den ladungstragenden Kasten (13);
ein Inhaltserkennungssystem (7) zum Messen von mindestens einem Bestandsinhalt des Halmmaterials, transportiert in den ladungstragenden Kasten (13);
und
einen Datenprozessor (2), verbunden mit dem Inhalt erkennenden System (7) zum Empfangen von Inhaltssignalen, anzeigend für den mindestens einen Bestandsinhaltsteil;
**gekennzeichnet durch**
ein Gewicht erkennendes System (3, 4) zum Messen des Gewichts von Halmmaterial, anwesend in dem Ladewagen (1);
wobei der Datenprozessor (2) an das Gewicht erkennende System (3, 4) angeschlossen ist, um Gewichtsignale, anzeigend für das Gewicht von Halmmaterial, anwesend in dem Ladewagen (1), zu empfangen;
wobei der Datenprozessor (2) angeordnet ist zum Erfassen, während des Sammelns, von Inhaltsdaten, bestimmt anhand der empfangenen Inhaltssignale in Kombination mit Gewichtdaten, bestimmt anhand des Gewichtsignals, resultierend von dem Gewicht von gesammeltem Halmmaterial, dessen Inhaltssignal gemessen wurde, zur Berechnung zugehöriger Gewichtänderungsdaten, resultierend von dem zusätzlichen Gewicht von gesammeltem Halmmaterial, dessen Inhaltsdaten gemessen wurden, und zur Berechnung einer Menge des mindestens einen Bestandsinhalts, gesammelt über die Strecke, durch Berechnung einer Vielzahl von Produkten der Inhaltsdaten und der zugehörigen Gewichtänderungsdaten, resultierend von dem zusätzlichen Gewicht von gesammeltem Halmmaterial, dessen Inhaltsdaten gemessen wurden, und Summieren der Produkte über die Strecke, von der das Halmmaterial gesammelt wurde.

2. Ladewagensystem nach Anspruch 1, ferner umfassend ein positionsbestimmendes System zur Bestimmung und Ausgabe eines Positionssignals, anzeigend für eine aktuelle Position des Wagens (1), wobei der Datenprozessor (2) an das positionsbestimmende Signal zum Empfangen der Positionssignale angeschlossen ist, und wobei der Datenprozessor (2) angeordnet ist zum Erfassen von aktuellen Positionsdaten in Verbindung mit Gewichtänderungsdaten, resultierend von dem zusätzlichen Gewicht von Halmmaterial, gesammelt beim Passieren der Position und mit Inhaltsdaten, gemessen von dem Halmmaterial.

3. Ladewagensystem nach Anspruch 2, wobei der Datenprozessor (2) angeordnet ist zum Erfassen der aktuellen Positionsdaten in Verbindung mit den Gewichtänderungsdaten, resultierend von dem zusätzlichen Gewicht des Halmmaterials, gesammelt beim Passieren der Position und mit den Inhaltsdaten, gemessen von dem Halmmaterial, durch Erfassen der Positionsdaten in Verbindung mit den Produkten.

4. Ladewagen nach einem der vorhergehenden Ansprüche, wobei das Gewicht erkennende System Gewichtsensoren (3, 4) zum Erkennen von Druck, ausgeübt auf jedes Rad, und, wenn der Wagen (1) angeordnet ist zum Koppeln an einen Traktor, einen Gewichtsensor (3) zum Erkennen von Druck, ausgeübt über eine Kopplung zum Koppeln des Wagens an einen Traktor, umfasst.

5. Lader nach Anspruch 4, wobei der Aufnehmer (11) ein nachgeführter Aufnehmer (11) ist, drehend montiert zum Schwingen als Reaktion darauf, wenn er beim Antreffen eines welligen Geländes angehoben wird.

6. Verfahren zum Sammeln von Halmmaterial über eine Strecke unter Verwendung eines Ladewagensystems und Bestimmen von mindestens einem Bestandteil, gesammelt über die Strecke, das Verfahren umfassend:
das Passieren des Ladewagens (1) über die Strecke;
einen Aufnehmer (11) des Wagens (1), der Halmmaterial sammelt und gesammeltes Halmmaterial in einen ladungstragenden Kasten des Wagens (1) transportiert;
ein Inhalt erkennendes System (7) des Wagens (1), welches mindestens einen Bestandsinhalt des Halmmaterials, das in den ladungstragenden Kasten (13) transportiert wird, misst; und
einen Datenprozessor (2), der Inhaltssignale empfängt, die anzeigend für den mindestens einen Bestandsinhalt sind;
**gekennzeichnet durch**
ein Gewicht erkennendes System (3, 4) des Wagens (1), welches das Gewicht von Halmmaterial, anwesend in dem Ladewagen (1), misst; wobei
der Datenprozessor (2) Gewichtsignale empfängt, die anzeigend für das Gewicht von Halmmaterial, anwesend in dem Lader, sind; und
der Datenprozessor (2) während des Sammelns Inhaltsdaten erfasst, bestimmt anhand des empfangenen Inhaltssignals in Kombination mit Gewichtdaten, bestimmt anhand des Gewichtsignals, resultierend von dem Gewicht von gesammeltem Halmmaterial, dessen Inhaltssignal gemessen wurde, zugehörige Gewichtänderungsdaten berechnet, resultierend von dem zusätzlichen Gewicht von gesammeltem Halmmaterial, dessen Inhaltsdaten gemessen wurden, und eine Menge des mindestens einen Bestandteils berechnet, gesammelt über die Strecke, durch Berechnen einer Vielzahl von Produkten der Inhaltsdaten und der zugehörigen Gewichtänderungsdaten, resultierend von dem zusätzlichen Gewicht von gesammeltem Halmmaterial, dessen Inhaltsdaten gemessen wurden, und die Produkte über die Strecke summiert, von der das Halmmaterial gesammelt wurde.

7. Verfahren nach Anspruch 6, ferner umfassend: ein positionsbestimmendes System, das ein Positionssignal, anzeigend für eine aktuelle Position des Wagens (1), bestimmt und ausgibt, der Datenprozessor (2) erfassend aktuelle Positionsdaten in Verbindung mit Gewichtänderungsdaten, resultierend von dem zusätzlichen Gewicht von Halmmaterial, gesammelt beim Passieren der Position und mit Inhaltsdaten, gemessen von dem Halmmaterial.

8. Verfahren nach Anspruch 7, wobei der Datenprozessor (2) die aktuellen Positionsdaten in Verbindung mit den Gewichtänderungsdaten registriert, resultierend von dem zusätzlichen Gewicht des Halmmaterials, gesammelt beim Passieren der Position und mit den Inhaltsdaten, gemessen von dem Halmmaterial, durch Erfassen der Positionsdaten in Verbindung mit den Produkten.

9. Verfahren nach einem der Ansprüche 6-8, wobei die Gewichtänderungsdaten in Verbindung mit Inhaltsdaten registriert werden, resultierend von einem Inhaltssignal, erfasst nach einer Verzögerung im Anschluss an die Erfassung der Gewichtsignale, von denen die Gewichtänderungsdaten bestimmt wurden.

10. Verfahren nach einem der Ansprüche 6-9, wobei die Gewichtsignale erfasst werden, während die Aufnahmeeinheit gegen ein Feld gedrückt wird, von dem das Halmmaterial gesammelt wird.

11. Verfahren nach einem der Ansprüche 6-10, wobei mindestens geglättete Gewicht- oder Inhaltsdaten durch Glätten der Gewicht- oder Inhaltsdaten berechnet werden.

12. Verfahren nach Anspruch 11, wobei das Glätten durch Mittelbildung der Gewicht- oder Inhaltsdaten über ein bewegendes Fenster von Zeit oder Verschiebung oder über aufeinanderfolgende Perioden von Zeit oder über aufeinanderfolgende Verschiebungsabstände durchgeführt wird.

13. Verfahren nach Anspruch 12, wobei die Mittelbildung durch gewichtete Mittelbildung durchgeführt wird, in der Werte, bestimmt anhand von Gewicht- oder Inhaltsdaten, näher einem Zeit- oder Verschiebungspunkt, um einen höheren Faktor als die Gewicht- oder Inhaltsdaten, entfernter von dem Zeit- oder Verschiebungspunkt, multipliziert werden.

14. Verfahren nach Anspruch 12 oder 13, wobei der Wagen (1) eine Aufhängung zum Absorbieren vertikaler Radverschiebungen beim Rollen über Wellungen hat, welche Aufhängung eine natürliche vertikale Oszillationsfrequenz des Wagens (1) mit einer Zykluszeit bestimmt, wobei das Fenster oder der Zeitraum, über das bzw. den die Gewichtdaten gemittelt werden, eine Dauer hat, die mindestens gleich und bevorzugt ein ganzes Vielfaches der Zykluszeit ist.

## Revendications

1. Système de remorque autochargeuse comprenant :
une caisse porte-charge (13) destinée à contenir de la paille récoltée ;
un ramasseur (11) destiné à collecter la paille et à transporter la paille collectée vers la caisse porte-charge (13) ;
un système de détection de contenu (7) destiné à mesurer au moins une teneur en constituants de la paille transportée vers la caisse porte-charge (13) ;
et
un processeur de données (2) relié au système de détection de contenu (7) afin de recevoir des signaux de contenu qui indiquent la au moins une teneur en constituants ;
**caractérisé par**
un système de détection de poids (3, 4) destiné à mesurer le poids de la paille présente dans la remorque autochargeuse (1) ;
dans lequel le processeur de données (2) est relié au système de détection de poids (3, 4) afin de recevoir des signaux de poids qui indiquent le poids de la paille présente dans la remorque autochargeuse (1) ;
dans lequel le processeur de données (2) est prévu pour enregistrer, pendant la collecte, des données de contenu déterminées à partir des signaux de contenu reçus en combinaison avec les données de poids déterminées à partir du signal de poids résultant du poids de la paille collectée à partir de laquelle le signal de contenu a été mesuré, pour calculer des données de changement de poids associées résultant du poids supplémentaire de la paille collectée à partir de laquelle les données de contenu ont été mesurées, et pour calculer une quantité du au moins un constituant collecté sur ladite trajectoire en calculant une pluralité de produits desdites données de contenu et desdites données de changement de poids associées résultant du poids supplémentaire de la paille collectée à partir de laquelle les données de contenu ont été mesurées, et en additionnant lesdits produits sur la trajectoire à partir de laquelle la paille a été collectée.

2. Système de remorque autochargeuse selon la revendication 1, comprenant en outre un système de détermination de position destiné à déterminer et à délivrer un signal de position qui indique une position actuelle de la remorque (1), dans lequel le processeur de données (2) est relié au signal de détermination de position afin de recevoir les signaux de position, et dans lequel le processeur de données (2) est prévu pour enregistrer des données de position actuelle en association avec les données de changement de poids résultant du poids supplémentaire de la paille collectée lors du passage par ladite position, et avec les données de contenu mesurées à partir de ladite paille.

3. Système de remorque autochargeuse selon la revendication 2, dans lequel le processeur de données (2) est prévu pour enregistrer les données de position actuelle en association avec les données de changement de poids résultant du poids supplémentaire de la paille collectée lors du passage par ladite position, et avec les données de contenu mesurées à partir de ladite paille, en enregistrant les données de position en association avec lesdits produits.

4. Système de remorque autochargeuse selon l'une quelconque des revendications précédentes, dans lequel le système de détection de poids comprend des capteurs de poids (3, 4) destinés à détecter la pression exercée sur chaque roue et, si la remorque (1) est prévue pour être reliée à un tracteur, un capteur de poids (3) destiné à détecter la pression exercée via un accouplement destiné à accoupler la remorque à un tracteur.

5. Système de remorque autochargeuse selon la revendication 4, dans lequel le ramasseur (11) est un ramasseur remorqué (11) monté de manière pivotante afin de se balancer en réponse à son soulèvement en cas d'ondulation du terrain.

6. Procédé de collecte de paille sur une trajectoire à l'aide d'un système de remorque autochargeuse et de détermination d'une quantité d'au moins un constituant collecté sur ladite trajectoire, ledit procédé comprenant :
le passage de ladite remorque autochargeuse (1) sur ladite trajectoire ;
un ramasseur (11) de la remorque (1) qui collecte la paille et transporte la paille collectée vers une caisse porte-charge de la remorque (1) ;
un système de détection de contenu (7) de la remorque (1) qui mesure au moins une teneur en constituants de la paille transportée vers la caisse porte-charge (13) ; et
un processeur de données (2) qui reçoit des signaux de contenu qui indiquent la au moins une teneur en constituants ;
**caractérisé en ce que**
un système de détection de poids (3, 4) de la remorque (1) mesure le poids de la paille présente dans la remorque autochargeuse (1) ;
le processeur de données (2) reçoit des signaux de poids qui indiquent le poids de la paille présente dans la remorque ; et
le processeur de données (2) enregistre, pendant la collecte, des données de contenu déterminées à partir des signaux de contenu reçus en combinaison avec les données de poids déterminées à partir du signal de poids résultant du poids de la paille collectée à partir de laquelle le signal de contenu a été mesuré, calcule des données de changement de poids associées résultant du poids supplémentaire de la paille collectée à partir de laquelle les données de contenu ont été mesurées, et calcule une quantité du au moins un constituant collecté sur ladite trajectoire en calculant une pluralité de produits desdites données de contenu et desdites données de changement de poids associées résultant du poids supplémentaire de la paille collectée à partir de laquelle les données de contenu ont été mesurées et en additionnant lesdits produits sur la trajectoire à partir de laquelle la paille a été collectée.

7. Procédé selon la revendication 6, comprenant en outre : un système de détermination de position qui détermine et délivre un signal de position qui indique une position actuelle de la remorque (1), le processeur de données (2) enregistrant des données de position actuelle en association avec les données de changement de poids résultant du poids supplémentaire de la paille collectée lors du passage par ladite position et avec les données de contenu mesurées à partir de ladite paille.

8. Procédé selon la revendication 7, dans lequel le processeur de données (2) enregistre les données de position actuelle en association avec les données de changement de poids résultant du poids supplémentaire de la paille collectée lors du passage par ladite position et avec les données de contenu mesurées à partir de ladite paille, en enregistrant les données de position en association avec lesdits produits.

9. Procédé selon l'une quelconque des revendications 6 à 8, dans lequel les données de changement de poids sont enregistrées en association avec les données de contenu résultant d'un signal de contenu capturé après un retard suivant la capture des signaux de poids à partir desquels les données de changement de poids ont été déterminées.

10. Procédé selon l'une quelconque des revendications 6 à 9, dans lequel les signaux de poids sont capturés pendant que le ramasseur est appuyé contre un champ à partir duquel la paille est collectée.

11. Procédé selon l'une quelconque des revendications 6 à 10, dans lequel au moins des données de poids ou de contenu lissées sont calculées en lissant les données de poids ou de contenu.

12. Procédé selon la revendication 11, dans lequel le lissage est effectué en moyennant les données de poids ou de contenu sur une fenêtre mobile de temps ou de déplacement ou sur des périodes séquentielles ou sur des distances de déplacement séquentielles.

13. Procédé selon la revendication 12, dans lequel le moyennage est effectué réalisant une moyenne pondérée au cours de laquelle les valeurs déterminées à partir des données de poids ou de contenu plus proches d'un point dans le temps ou d'un point de déplacement sont multipliées par un facteur plus élevé que les données de poids ou de contenu plus éloignées du point dans le temps ou du point de déplacement.

14. Procédé selon la revendication 12 ou 13, dans lequel la remorque (1) possède une suspension destinée à absorber les déplacements verticaux des roues en cas de passage sur des ondulations, la suspension déterminant une fréquence d'oscillation verticale naturelle de la remorque (1) avec un temps de cycle, dans lequel la fenêtre ou la période sur laquelle les données de poids sont moyennées présente une durée qui est au moins égale à et de préférence un multiple entier du temps de cycle.
